# EUROPÄISCHE PATENTANMELDUNG

(11) **EP 4 759 617 A1**
(43) Veröffentlichungstag der Anmeldung: **17.06.2026**
(21) Anmeldenummer: 25221356.6
(22) Anmeldetag: 08.12.2025
(51) Int. Cl.: B60L 53/14, B60L 53/30, B60L 53/31, B60L 53/66, E01C 11/22, E04F 19/08, G07F 15/00

(54) **LADEVORRICHTUNG ZUM LADEN EINES ELEKTROFAHRZEUGS UND ZUM EINBAU IN EINE VERTIEFUNG EINES BORDSTEINS**

(30) Priorität: 12.12.2024 DE 102024137491
(71) Anmelder: Pierburg GmbH, 41460 Neuss (DE)
(72) Erfinder: Paffrath, Holger, 50259 Pulheim (DE); Holl, Daniel, 42549 Velberg (DE); Kohnen, Wolfgang, 52477 Alsdorf (DE); Turan, Alper, 50969 Köln (DE)
(74) Vertreter: Kirschner, Sebastian

(57) **Zusammenfassung**

Die Erfindung betrifft eine Ladevorrichtung (10) zum Laden eines Elektrofahrzeugs und zum Einbau in eine Vertiefung (12) eines Bordsteins (14), umfassend:
- ein Gehäuse (20), umfassend:
- eine Deckenwand (22), und
- eine Seitenwand (24), die an der Deckenwand (22) befestigt ist und sich von dieser nach unten erstreckt;

- ein Ladegerät (34), das in dem Gehäuse (20) angeordnet ist;
- einen Sendeempfänger (38) für Funkwellen, nämlich für Radiowellen, Mikrowellen oder Terahertzwellen, der in dem Gehäuse (20) angeordnet ist und an das Ladegerät (34) gekoppelt ist.

Um bei der Ladevorrichtung (10) zum Laden eines Elektrofahrzeugs und zum Einbau in eine Vertiefung (12) eines Bordsteins (14) eine stabilere Struktur zu schaffen, weist die Seitenwand (24) einen Wandbereich (24b) auf, der aus einem für die Funkwellen durchlässigen Material besteht.

## Beschreibung

Die Erfindung betrifft eine Ladevorrichtung zum Laden eines Elektrofahrzeugs und zum Einbau in eine Vertiefung eines Bordsteins.

Die WO 2023/179896 A1 offenbart eine Bordstein-Ladevorrichtung zum Laden eines Energiespeichers eines elektrisch angetriebenen Fahrzeugs. Diese Ladevorrichtung umfasst ein Bordsteinelement, welches im Innern einen Aufnahmeraum aufweist, und eine Ladeeinheit, die am Bordsteinelement ausgebildet ist und im Aufnahmeraum angeordnete elektronische Bauteile, eine Schnittstelle zur Energieübertragung auf den Energiespeicher und Sende- und Empfangseinheiten aufweist. Das Bordsteinelement besteht aus einem Grundkörper aus Beton sowie einem Aufnahmebehälter aus Stahl, der den Aufnahmeraum begrenzt. Der Aufnahmebehälter ist hohlquaderförmig ausgebildet und weist eine nach oben gerichtete, offene Seite auf, die durch einen Schutzdeckel verschlossen ist. Der Schutzdeckel ist aus Stahl und über Schrauben am Aufnahmebehälter befestigt, welcher in den Grundkörper eingeklebt ist. Der Schutzdeckel verschließt die nach oben weisende, offene Seite des Aufnahmebehälters. Durch den Schutzdeckel wird der im Innern des Aufnahmebehälters und damit im Innern des Bordsteinelementes ausgebildete Aufnahmeraum nach oben begrenzt. Der Schutzdeckel bildet eine nach außen zur Umgebung freiliegende, elektrisch leitende Begrenzungswand des Bordsteinelementes. Am Schutzdeckel sind zwei Ausnehmungen ausgebildet. Die erste Ausnehmung wird durch eine erste Abdeckung aus einem bruchsicheren und kratzfesten Glas abgedeckt und dichtend verschlossen. Unter der ersten Abdeckung ist eine Anzeigeeinheit eines Energiezählers sowie eine erste Sende- und Empfangseinheit in Form einer RFID-Antenne angeordnet, welche ebenfalls Teile der Ladeeinheit bilden. Das Glas ist ein nicht leitendes und nichtmetallisches Material, welches Funkwellen nur in einem vernachlässigbar geringen Maß absorbiert, so dass die unmittelbar unter dem Glas angeordnete RFID-Antenne hohe Sende- und Empfangsleistungen erreicht. Die Sende- und Empfangseinheit befindet sich unmittelbar unterhalb der ersten Abdeckung aus Glas. Die zweite Ausnehmung ist durch eine zweite Abdeckung aus Kunststoff abgedeckt. Unterhalb der zweiten Abdeckung ist eine weitere Sende- und Empfangseinheit in Form einer Mobilfunkantenne angeordnet. Die Mobilfunkantenne ist in der zweiten Ausnehmung angeordnet, welche lediglich an einer zur Umgebung weisenden Oberfläche des Schutzdeckels ausgebildet ist. Die Mobilfunkantenne liegt in der zweiten Ausnehmung unter Zwischenlage einer dünnen Kunststoffschicht auf dem Schutzdeckel auf und ist mit geringem Abstand zur Oberfläche des Schutzdeckels im Zwischenraum zwischen dem Schutzdeckel und der zweiten Abdeckung im Bereich der zweiten Ausnehmung befestigt. Die Mobilfunkantenne wird nach oben lediglich durch die zweite Abdeckung abgedeckt, so dass die Funkwellen weitestgehend ungehindert nach außen dringen können und so eine gute Kommunikation zum Nutzer und zum Serverbetreiber hergestellt werden kann.

Bei dieser bekannten Ladevorrichtung sind die beiden Abdeckungen aus Glas beziehungsweise Kunststoff auf der Oberseite des Gehäuses platziert. Daher sind sie den Belastungen durch Überfahrt von Fahrzeugen ausgesetzt und können dadurch zerbrechen und verkratzen. Zudem bestehen Vandalismusrisiken. Außerdem schwächen die beiden Ausnehmungen, die durch die Abdeckungen verschlossen sind, die Struktur des Schutzdeckels.

Es ist Aufgabe der Erfindung, eine Ladevorrichtung zum Laden eines Elektrofahrzeugs und zum Einbau in eine Vertiefung eines Bordsteins zu schaffen, die eine stabilere Struktur hat.

Diese Aufgabe wird durch eine Ladevorrichtung zum Laden eines Elektrofahrzeugs und zum Einbau in eine Vertiefung eines Bordsteins gelöst, die gemäß dem Anspruch 1 ausgebildet ist. Vorteilhafte Weiterbildungen sind in den abhängigen Ansprüchen definiert.

Die Erfindung schlägt eine Ladevorrichtung zum Laden eines Elektrofahrzeugs und zum Einbau in eine Vertiefung eines Bordsteins vor, die Folgendes umfasst:
- ein Gehäuse, umfassend:
- eine Deckenwand, und
- eine Seitenwand, die an der Deckenwand befestigt ist und sich von dieser nach unten erstreckt;
- ein Ladegerät, das in dem Gehäuse angeordnet ist;
- einen Sendeempfänger für Funkwellen, nämlich für Radiowellen, Mikrowellen oder Terahertzwellen, der in dem Gehäuse angeordnet ist und an das Ladegerät gekoppelt ist; wobei
- die Seitenwand einen Wandbereich aufweist, der aus einem für die Funkwellen durchlässigen Material besteht.

Folglich besteht die Seitenwand zumindest teilweise aus einem für die Funkwellen durchlässigen Material.

Die Erfindung ermöglicht es, die Deckenwand ohne Ausnehmungen zu bilden, die durch Abdeckungen verschlossen sind, die aus einem für die Funkwellen durchlässigen Material, wie beispielsweise Glas oder Kunststoff bestehen. Denn die Funkwellen, die der Sendeempfänger abstrahlen beziehungsweise empfangen soll, können durch die Seitenwand aus dem Innenraum des Gehäuses, in dem der Sendeempfänger angeordnet ist, in die Umgebung oder aus der Umgebung in den Innenraum treten.

Nach dem Einbau der Ladevorrichtung in einen Bordstein, der beispielsweise aus Beton oder Naturstein besteht, wäre diese Seitenwand vor den Lasten der Überfahrt von Autos sowie vor Vandalismus geschützt. Der Beton beziehungsweise Naturstein des Bordsteins selbst stellt keine starke Barriere für die Funkwellen dar.

Die Ladevorrichtung kann nach Bedarf auf beliebige Weise ausgebildet sein, beispielsweise derart, dass sie kein oder mindestens ein zusätzliches Gehäuse, kein oder mindestens ein zusätzliches Ladegerät und/oder keinen oder mindestens einen zusätzlichen Sendeempfänger umfasst.

Jedes Gehäuse kann nach Bedarf auf beliebige Weise ausgebildet sein, beispielsweise derart, dass es keine oder mindestens eine zusätzliche Seitenwand umfasst.

In einer beispielhaften Ausführungsform ist spezifiziert, dass die Deckenwand aus Metall, insbesondere aus Edelstahl besteht.

In einer beispielhaften Ausführungsform ist spezifiziert, dass das Material Glas und/oder Kunststoff umfasst. Das Material kann nach Bedarf auf beliebige Weise ausgebildet sein, beispielsweise derart, dass es genau eine Sorte von Glas oder mindestens eine zusätzliche Sorte von Glas und/oder genau eine Sorte von Kunststoff oder mindestens eine zusätzliche Sorte von Kunststoff umfasst. Jede Sorte von Kunststoff kann beispielsweise Polyethylen, Polypropylen, Polymethylmethacrylat, Polyvinylchlorid, Polystyrol, Polyurethan, Polyethylenterephthalat, Acrylnitril-Butadien-Styrol oder Polyamid sein.

In einer beispielhaften Ausführungsform ist spezifiziert, dass der Wandbereich einen Teil der Seitenwand bildet und die Seitenwand im Übrigen aus Metall besteht.

In einer beispielhaften Ausführungsform ist spezifiziert, dass der Wandbereich einen Teil der Seitenwand bildet, und der Sendeempfänger eine Antenne umfasst, die zumindest teilweise mit dem Wandbereich überlappt.

In einer beispielhaften Ausführungsform ist spezifiziert, dass die Ladevorrichtung einen Steckverbinder umfasst, der an das Ladegerät gekoppelt ist und in einer Öffnung der Deckenwand angeordnet ist bzw. sitzt. Die Ladevorrichtung kann nach Bedarf auf beliebige Weise ausgebildet sein, beispielsweise derart, dass sie keinen oder mindestens einen zusätzlichen Steckverbinder umfasst. Jeder Steckverbinder kann nach Bedarf auf beliebige Weise ausgebildet sein, beispielsweise derart, dass er eine Schuko-Buchse oder eine Buchse gemäß IEC 62196-2 Typ 1, IEC 62196-2 Typ 2, IEC 62196-2 Typ 3, CHAdeMO, CCS oder NACS umfasst.

In einer beispielhaften Ausführungsform ist spezifiziert, dass die Ladevorrichtung einen Bordstein umfasst, der in seiner Oberseite eine Vertiefung aufweist, und das Gehäuse in der Vertiefung angeordnet ist.

Der Bordstein kann nach Bedarf auf beliebige Weise ausgebildet sein und beispielsweise aus Beton und/oder Naturstein bestehen. Vorzugsweise ist das Gehäuse in der Vertiefung fest verankert und beispielsweise durch Schrauben an dem Bordstein befestigt.

Es gibt nun eine Vielzahl von Möglichkeiten, die Erfindung in vorteilhafter Art und Weise auszugestalten und weiterzubilden. Es darf hierzu zunächst auf die dem Patentanspruch 1 nachgeordneten Patentansprüche verwiesen werden. Im Folgenden wird nun eine bevorzugte Ausgestaltung der Ladevorrichtung anhand der Zeichnung und der dazugehörigen Beschreibung näher erläutert bzw. beschrieben. In der Zeichnung zeigt:
- FIG. 1: einen Querschnitt einer bevorzugten Ausführungsform einer erfindungsgemäßen Ladevorrichtung zum Laden eines Elektrofahrzeugs und zum Einbau in eine Vertiefung eines Bordsteins; und
- FIG. 2: eine Seitenansicht von links der Ladevorrichtung aus FIG. 1.

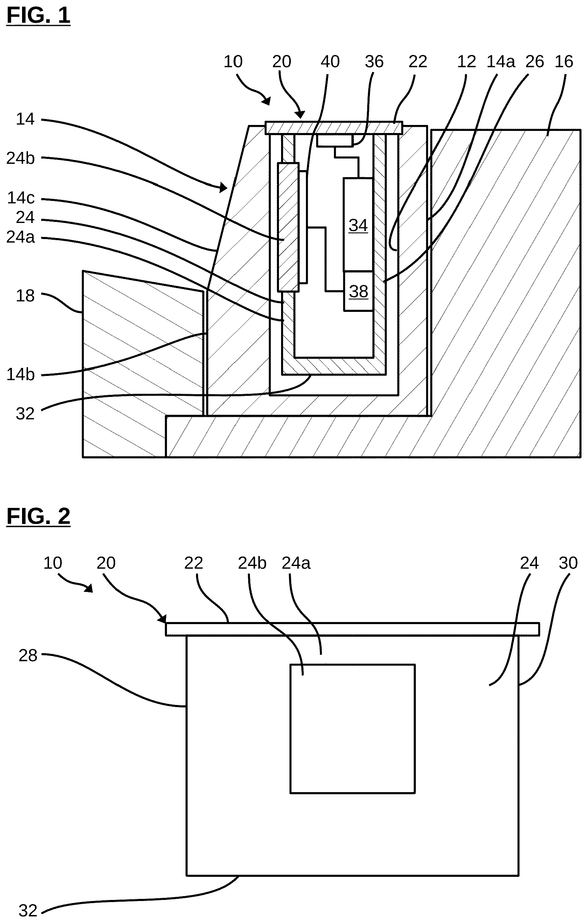

In den FIG. 1 und 2 ist eine bevorzugte Ausführungsform einer erfindungsgemäßen Ladevorrichtung 10 zum Laden eines Elektrofahrzeugs (nicht dargestellt) und zum Einbau in eine Vertiefung 12 eines Bordstein 14, der beispielhaft aus Beton besteht, schematisch dargestellt. In FIG. 1 ist die Ladevorrichtung 10 zusammen mit dem sie aufnehmenden Bordstein 14 dargestellt, wohingegen sie in FIG. 2 separat dargestellt ist. Der Bordstein 14 dient beispielhaft als übliche stufige Abgrenzung zwischen einem Gehweg 16 und einer gegenüber dem Gehweg 16 abgesenkten Fahrbahn 18. Seine in FIG. 1 rechte, im Wesentlichen senkrechte, erste Seitenwand 14a grenzt vollflächig an den Gehweg 16 an. Seine gegenüberliegende, in FIG. 1 linke, zweite Seitenwand weist einen unteren, im Wesentlichen senkrechten Wandabschnitt 14b, der vollflächig an die Fahrbahn 18 angrenzt, sowie einen oberen Wandabschnitt 14c auf, der von dem unteren Wandabschnitt 14b schräg zu der rechten Seitenwand 14a hin verläuft und frei liegt.

Die Ladevorrichtung 10 umfasst ein Gehäuse 20, das eine im Wesentlichen waagerechte Deckenwand 22, eine erste, eine zweite, eine dritte und eine vierte, jeweils im Wesentlichen senkrechte Seitenwand 24, 26, 28, 30 sowie eine im Wesentlichen waagerechte Bodenwand 30 umfasst. Die Seitenwände 24-30 umgeben den Innenraum des Gehäuses 20 in Umfangsrichtung, sind an der Deckenwand 22 befestigt ist und erstrecken sich von dieser nach unten bis zur Bodenwand 32, an der sie ebenfalls befestigt sind. Das Gehäuse 20 kann beispielhaft durch Schrauben (nicht dargestellt) an dem Bordstein 14 befestigt und somit in dessen Vertiefung 12 fest verankert werden.

Die Ladevorrichtung 10 umfasst außerdem ein Ladegerät 34, das in dem Gehäuse 20 angeordnet ist, und einen Steckverbinder 36, der an das Ladegerät 34 gekoppelt ist, sodass das Ladegerät 34 elektrische Energie über ein an den Steckverbinder 36 angeschlossenes Ladekabel in einen Energiespeicher eines Elektrofahrzeugs speisen kann. Der Steckverbinder 36 ist beispielhaft als Buchse gemäß IEC 62196-2 Typ 2 ausgebildet und in einer Durchgangsöffnung (nicht dargestellt) der Deckenwand 22 eingelassen.

Die Ladevorrichtung 10 umfasst des Weiteren einen Sendeempfänger 38 für Funkwellen, der in dem Gehäuse 20 angeordnet ist und an das Ladegerät 34 zu dessen Steuerung gekoppelt ist. Der Sendeempfänger 38 ist beispielhaft als 4G-Modem ausgebildet und umfasst eine Antenne 40, sodass ein Nutzer über ein Smartphone eine Verbindung zu dem Sendeempfänger 38 herstellen und die Ladevorrichtung 10 steuern kann.

Die Deckenwand 22, die Seitenwände 26-30 und die Bodenwand 32 bestehen 20 beispielhaft aus Edelstahl. Die Deckenwand 22 weist keine Ausnehmungen oder Öffnungen auf, die durch Abdeckungen verschlossen sind, die aus einem für die Funkwellen durchlässigen Material bestehen. Die in der Deckenwand 22 vorhandene Durchgangsöffnung für den Steckverbinder 36 ist wie üblich durch einen stabilen Deckel aus Edelstahl verschlossen.

Die Seitenwand 24 - links in FIG. 1 und vorne in FIG. 2 - weist im eingebauten Zustand, in dem sie in die Vertiefung 12 des Bordsteins 14 eingebaut ist, zu den Wandabschnitten 14b, 14c und der Fahrbahn 18 hin und von der ersten Seitenwand 14a und dem Gehweg 16 weg. Die Seitenwand 24 weist einen rahmenartigen, ersten Wandbereich 24a, in dem eine - beispielhaft im Wesentlichen rechteckige - Ausnehmung ausgebildet ist, sowie einen zweiten Wandbereich 24b auf, der die Ausnehmung feuchtigkeits- und dampfdicht verschließt und passend zu der Ausnehmung ausgebildet ist, also ebenfalls beispielhaft im Wesentlichen rechteckig. Der Wandbereich 24a besteht beispielhaft aus Edelstahl, wohingegen der Wandbereich 24b beispielhaft aus Polymethylmethacrylat besteht, und somit aus aus einem für die Funkwellen, die der Sendeempfänger 38 verwendet, durchlässigen Material. Folglich besteht die Seitenwand 24 zumindest teilweise aus einem für die Funkwellen durchlässigen Material. Die Antenne 40 ist vollflächig an der Innenseite des Wandbereichs 24b angebracht, sodass sie zumindest teilweise, bei dieser Ausführungsform sogar vollständig, mit dem Wandbereich 24b überlappt.

### Bezugszeichenliste:

- 10: Ladevorrichtung
- 12: Vertiefung von 14
- 14: Bordstein
- 14a: erste Seitenwand des Bordsteins14
- 14b/c: unterer/oberer Wandabschnitt des Bordsteins 14
- 16: Gehweg
- 18: Fahrbahn
- 20: Gehäuse der Ladevorrichtung 10
- 22: Deckenwand des Gehäuses 20
- 24: erste Seitenwand des Gehäuses 20
- 24a/b: erster/zweiter Wandbereich der ersten Seitenwand 24
- 26: zweite Seitenwand des Gehäuses 20
- 28: dritte Seitenwand des Gehäuses 20
- 30: vierte Seitenwand des Gehäuses 20
- 32: Bodenwand des Gehäuses 20
- 34: Ladegerät der Ladevorrichtung 10
- 36: Steckverbinder der Ladevorrichtung 10
- 38: Sendeempfänger der Ladevorrichtung 10
- 40: Antenne des Sendempfängers 38

## Patentansprüche

1. Ladevorrichtung (10) zum Laden eines Elektrofahrzeugs und zum Einbau in eine Vertiefung (12) eines Bordsteins (14), umfassend:
- ein Gehäuse (20), umfassend:
- eine Deckenwand (22), und
- eine Seitenwand (24), die an der Deckenwand (22) befestigt ist und sich von dieser nach unten erstreckt;
- ein Ladegerät (34), das in dem Gehäuse (20) angeordnet ist;
- einen Sendeempfänger (38) für Funkwellen, nämlich für Radiowellen, Mikrowellen oder Terahertzwellen, der in dem Gehäuse (20) angeordnet ist und an das Ladegerät (34) gekoppelt ist;
**dadurch gekennzeichnet, dass** die Seitenwand (24) einen Wandbereich (24b) aufweist, der aus einem für die Funkwellen durchlässigen Material besteht.

2. Ladevorrichtung (10) nach Anspruch 1, **dadurch gekennzeichnet, dass** die Deckenwand (22) aus Metall besteht.

3. Ladevorrichtung (10) nach einem oder mehreren der vorherigen Ansprüche, **dadurch gekennzeichnet, dass** das Material Glas und/oder Kunststoff umfasst.

4. Ladevorrichtung (10) nach einem oder mehreren der vorherigen Ansprüche, **dadurch gekennzeichnet, dass** der Wandbereich (24b) einen Teil der Seitenwand (24) bildet und die Seitenwand (24) im Übrigen (24a) aus Metall besteht.

5. Ladevorrichtung (10) nach einem oder mehreren der vorherigen Ansprüche, **dadurch gekennzeichnet, dass** der Wandbereich (24b) einen Teil der Seitenwand (24) bildet und der Sendeempfänger (38) eine Antenne (40) umfasst, die zumindest teilweise mit dem Wandbereich (24b) überlappt.

6. Ladevorrichtung (10) nach einem oder mehreren der vorherigen Ansprüche, **gekennzeichnet durch** einen Steckverbinder (36), der an das Ladegerät (34) gekoppelt ist und in einer Öffnung der Deckenwand (22) angeordnet ist.

7. Ladevorrichtung (10) nach einem oder mehreren der vorherigen Ansprüche, **gekennzeichnet durch** einen Bordstein (14), der in seiner Oberseite eine Vertiefung (12) aufweist, wobei das Gehäuse (20) in der Vertiefung (12) angeordnet ist.
